# EUROPEAN PATENT SPECIFICATION

(11) **EP 3 468 351 B1**
(45) Date of publication and mention of the grant of the patent: **09.09.2020**
(21) Application number: 17813667.7
(22) Date of filing: 13.06.2017
(51) Int. Cl.: A01K 1/12, A01K 11/00, A01J 5/007, A01K 29/00

(54) **A LIVESTOCK MANAGEMENT SYSTEM AND METHOD OF OPERATION**
TIERHALTUNGSSYSTEM UND VERFAHREN ZUM BETRIEB
SYSTÈME DE GESTION DE BÉTAIL ET PROCÉDÉ DE FONCTIONNEMENT

(30) Priority: 13.06.2016 NZ 72112616
(43) Date of publication of application: 17.04.2019
(73) Proprietor: Lic Automation Limited, Hamilton 3204 (NZ)
(72) Inventor: DOOHAN, Richard John, Hamilton 3204 (NZ); VAN BEEK, John-Gerard Robert, Hamilton 3204 (NZ)
(74) Representative: Hertin und Partner Rechts- und Patentanwälte PartG mbB
(86) International application number: PCT/NZ2017/050078
(87) International publication number: WO 2017/217870

(56) References cited:
- EP-A1- 0 095 883
- WO-A1-2015/005802
- US-A- 4 548 161
- US-A- 5 743 209
- US-A1- 2009 133 634
- US-A1- 2010 263 595
- US-B2- 7 296 536

## Description

### TECHNICAL FIELD

The present disclosure relates to a livestock management system and method of operation - more particularly a system for selectively associating an identifier of an individual animal with data obtained from at least one performance sensor associated with one of a plurality of milking stalls in a milking facility.

### BACKGROUND ART

Farming operations continually seek ways to increase productivity or efficiency. Even a relatively small change can have a significant impact on profitability. This has led to numerous developments in maximising individual animal potential, with the collection of data relating to an individual animal's physiological status and production characteristics enabling more informed decision making with regard to management of that animal and the herd to which it belongs.

For example, in the context of milking animals it is well known to use sensors to obtain information relating to milk collected from individual milking stalls in a milking facility, and associate that information with individual animals, see e.g. US 4,548,161 A. It should be appreciated that while reference will herein be made to a milking animal being a dairy cow this is not intended to be limiting, and the various embodiments of the present disclosure may be used in the milking of other animals, for example: sheep, goats, donkeys, dromedaries, yaks, fillies, buffalo, horses and similar. Such information is used in decision making regarding such matters as culling, breeding, medical treatment, animal specific feed rations as well as measurement of milk production efficiency.

Numerous systems are known for the identification of individual animals and associating that identification with a milking stall - primarily utilising some form of reader for detecting the presence of an electronic identification device carried by the animal at a known location. However provision of a number of readers at the stalls, or even a shared stationary reader which animals pass, can greatly increase the cost of the milking facility infrastructure.

Further, some configurations of milking facilities are susceptible to the introduction of errors into the identification and association of animals with stall location as the result of animal behaviour. For example, it is difficult to positively identify a cow in a herringbone milking system, as the cows stand in a row side by side which allows them to jostle horizontally and appear to be in alternative milking positions. Further, errors may be introduced where the system fails to read an electronic identification device that is broken or absent. Unless such errors are corrected, milking data may not be associated with an animal, or mistakenly attributed to another animal.

It is an object of the present invention to address the foregoing problems or at least to provide the public with a useful choice.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Further aspects and advantages of the present invention will become apparent from the ensuing description which is given by way of example only.

### SUMMARY

The invention relates to a system according to claim 1 for use in a milking facility including a plurality of individual milking stations for milking animals. The system includes at least one performance sensor associated with at least one milking station, configured to output a signal indicative of the performance measure sensed by the performance sensor. The system includes at least one processor. The at least one processor is configured to receive the signal from the at least one performance sensor. The at least one processor is configured to determine whether the performance measure is to be associated with an identifier of an individual animal being milked at the milking station. The at least one processor is configured to cause a notification to be issued alerting an operator as to which milking station the performance measure was obtained from. The at least one processor is configured to receive the identifier from a user device on input by the operator. The at least one processor is configured to associate the identifier with the performance measure in a database.

According to an exemplary embodiment of the disclosure there is provided a method for associating an identifier of an individual animal with a performance measure provided by at least one performance sensor associated with at least one milking station in a milking facility including a plurality of individual milking stations for milking animals. The method may include receiving, by at least one processor, a signal indicative of the performance measure sensed by the at least one performance sensor. The method may include determining, with the processor, whether the performance measure is to be associated with an identifier of an individual animal being milked at the associated milking station. The method may include causing a notification to be issued alerting an operator as to which milking station the performance measure was obtained from. The method may include receiving the identifier at the processor, the identifier input into a user device by the operator. The method may include associating the identifier with the performance measure in a database.

According to an exemplary embodiment of the disclosure there is provided a non-transitory computer-readable medium having instructions stored thereon that, upon execution by one or more processors, causes functions to be carried out associating an identifier of an individual animal with a performance measure provided by at least one performance sensor associated with at least one milking station in a milking facility including a plurality of individual milking stations for milking animals. The functions may include receiving, by at least one processor, a signal indicative of the performance measure sensed by the at least one performance sensor. The functions may include determining, with the processor, whether the performance measure is to be associated with an identifier of an individual animal being milked at the associated milking station. The functions may include causing a notification to be issued alerting an operator as to which milking station the performance measure was obtained from. The functions may include receiving the identifier at the processor, the identifier input into a user device by the operator. The functions may include associating the identifier with the performance measure in a database.

According to an exemplary embodiment of the disclosure there is provided a system for use in a milking facility including a plurality of individual milking stations for milking animals. The system may include at least one performance sensor associated with a milking station, configured to output a signal indicative of the performance measure sensed by the performance sensor. The system may include an alarm device associated with each milking station having an associated performance sensor, the alarm device configured to be selectively activated to alert an operator to attend the associated milking station. The system may include at least one processor. The at least one processor may be configured to receive the signal from the at least one performance sensor. The at least one processor may be configured to determine whether the performance measure requires recordal against an identifier associated with an individual animal being milked at the milking station associated with the at least one performance sensor. The at least one processor may be configured to activate the alarm device associated with the milking station associated with the at least one performance sensor. The at least one processor may be configured to receive the identifier input into a user device by the operator. The at least one processor may be configured to record the identifier against the performance measure in a database.

According to an exemplary embodiment of the disclosure there is provided a method for associating an identifier of an individual animal with a performance measure provided by at least one performance sensor associated with a milking station in a milking facility including a plurality of individual milking stations for milking animals. The method may include receiving, by at least one processor, a signal indicative of the performance measure sensed by the at least one performance sensor. The method may include determining, with the at least one processor, whether the performance measure requires recordal against the identifier associated with the individual animal being milked at the milking station associated with the at least one performance sensor. The method may include activating an alarm device associated with the milking station associated with the at least one performance sensor, to alert an operator to attend the associated milking station. The method may include receiving, by at least one processor, the identifier input into a user device by the operator. The method may include recording the identifier against the performance measure in a database.

According to an exemplary embodiment of the disclosure there is provided a non-transitory computer-readable medium having instructions stored thereon that, upon execution by one or more processors, causes functions to be carried out associating an identifier of an individual animal with a performance measure provided by at least one performance sensor associated with a milking station in a milking facility including a plurality of individual milking stations for milking animals. The functions may include receiving, by at least one processor, a signal indicative of the performance measure sensed by the at least one performance sensor. The functions may include determining, with the at least one processor, whether the performance measure requires recordal against the identifier associated with the individual animal being milked at the milking station associated with the at least one performance sensor. The functions may include activating an alarm device associated with the milking station associated with the at least one performance sensor, to alert an operator to attend the associated milking station. The functions may include receiving, by at least one processor, the identifier input into a user device by the operator. The functions may include recording the identifier against the performance measure in a database.

According to an exemplary embodiment of the disclosure there is provided a system for use in a milking facility including a plurality of individual milking stations for milking animals. The system may include at least one performance sensor associated with a milking station, configured to output a signal indicative of the performance measure sensed by the performance sensor. The system may include at least one processor. The at least one processor may be configured to receive the signal from the at least one performance sensor. The at least one processor may be configured to transmit a notification of the performance measure being received to a user device for display in a user interface of the user device. The at least one processor may be configured to receive an identifier associated with an individual animal being milked at the milking station associated with the at least one performance sensor, the identifier input into the user device by an operator on selection of the notification. The at least one processor may be configured to record the identifier against the performance measure in a database.

The invention relates also to method according to claim 15 for associating an identifier of an individual animal with a performance measure provided by at least one performance sensor associated with a milking station in a milking facility including a plurality of individual milking stations for milking animals.

According to an exemplary embodiment of the disclosure, but not according to the invention, there is provided a non-transitory computer-readable medium having instructions stored thereon that, upon execution by one or more processors, causes functions to be carried out associating an identifier of an individual animal with a performance measure provided by at least one performance sensor associated with a milking station in a milking facility including a plurality of individual milking stations for milking animals. The functions may include receiving, by at least one processor, a signal indicative of the performance measure sensed by the at least one performance sensor. The functions may include transmitting a notification of the performance measure being received to a user device for display in a user interface of the user device. The functions may include receiving the identifier at the processor, the identifier input into the user device by an operator on selection of the notification. The functions may include recording the identifier against the performance measure in a database.

The present disclosure has particular application to milking facility configurations with animal access to a row of milking stations - for example, those known in the art as herringbone milking parlours (whether swing over or double-up configurations), swing-over milking parlours, a side-opening (also known as tandem or rapid exit in the art) type in which animals are released simultaneously into a lane from a series of milking stations by the raising of a shared barrier, or any other milking facility configuration including a plurality of milking stations in close proximity - such as, for example, a rotary milking parlour. For clarity, it should be appreciated that in exemplary embodiments in which a performance sensor is configured to sense a performance measure of extracted milk, a milking station may be effectively defined by the milking apparatus used to extract milk rather than a delineated position within a milking facility, as in some milking facility configurations a single milking apparatus may be shared between more than one potential standing position.

In exemplary embodiments, at least one performance sensor may be associated with each milking station. However it should be appreciated that this is not intended to be limiting, as in exemplary embodiments one or more performance sensors may be associated with a subset of the total number of milking stations - for example, every fourth milking station. In an exemplary embodiment, at least two of the milking stations have at least one associated performance sensor.

The identifier may be unique to an animal within a herd, or a larger collection of animals - such as New Zealand's National Animal Identification and Tracing (NAIT) scheme. It is well known to display this identifier on the animal - for example printed on an ear tag attached to an ear of the animal, although this is not intended to be limiting to all embodiments.

Numerous performance sensors are known for use in relation to milking animals. Non-limiting examples of such performance sensors may include: yield sensors that measure a volume of milk produced by an animal; composition sensors that measure properties of milk produced by an animal - e.g. fat and/or protein content; flow rate sensors to determine the rate of delivery of milk produced by an animal; temperature sensors; weight sensors to determine an animal's weight; health sensors such to measure conditions such as mastitis, body condition score, metabolic disorders, lameness, fertility disorders, BVD, Johne's disease; sensors to measure the feed efficiency of an animal - e.g. milk urea; sensors to measure the environmental impact of an animal - e.g. methane production; sensors to measure the reproductive status of an animal, including but not limited to pregnancy or oestrus detection; sensors to measure properties of milk relevant to milk processing - e.g. suitability for cheese making (like Afilab), free fatty acid content; and/or sensors detecting movement activity of an animal.

While various types of performance sensors may be implemented in exemplary embodiments of the present disclosure, for example those described above, it is envisaged that the present disclosure may have particular application to use with mastitis sensing. Mastitis is a common condition affecting some dairy cows, and is generally classified a sub-clinical or clinical depending upon the degree of inflammation in the mammary gland (udder). The most common cause of inflammation is a bacterial infection of the mammary gland. Clinical mastitis is characterised by visible abnormalities in the milk or udder of the cow. In the milk this consists of flakes, clots and a watery appearance, while symptoms of the udder are heat, swelling and sensitivity to touch.

The most common way a farm operator detects clinical mastitis is to "strip" a few squirts of milk, at the beginning of milking to check for abnormalities such as clots and flakes. When an animal is suffering from subclinical mastitis, it does not create visible changes in the milk or udder. Although the milk appears normal, cows with subclinical mastitis will produce less milk and the quality of the milk can be reduced. As well, the infected cows can be a source of infection to other animals in a herd. As there are no visible abnormalities in the milk, subclinical mastitis requires diagnostic tests for detection.

Somatic cell count (SCC) is the most common test to detect changes in the milk due to inflammation. The higher the SCC in the milk, the greater the level of inflammation in the tissue. An increase in somatic cell score in an animal's milk is undesirable for a number of reasons, including: higher SCC animals have reduced survival; it increases the likelihood of a farm incurring price penalties for milk supplied above a certain threshold; and high SCC levels are also an indicator of likelihood of clinical mastitis. Milk companies to which the collected milk is supplied commonly have critical levels of mastitis indicators in milk, above which penalties are incurred. Regular monitoring and detection of both clinical and subclinical mastitis are commonly considered key components of an effective herd management program. By way of example, the at least one performance sensor may include a SCC sensor such as the CellSense™ somatic cell count sensor sold by LIC Automation™.

Issuance of a notification to alert an operator as to which milking station the performance measure was obtained from may be achieved in a number of ways. In an exemplary embodiment an alarm device may be associated with each milking station having an associated performance sensor, and activated to alert the operator. In an exemplary embodiment a notification may be transmitted to the user device of the operator. In an exemplary embodiment the alarm device may be activated, and a notification transmitted to the user device.

The alarm device may emit any indication suitable to alert the operator to attend the associated milking station, for example a visual and/or audible indication. In an exemplary embodiment the alarm device may include at least one light emitting device. In an exemplary embodiment the alarm device may include a sound emitting device.

In an exemplary embodiment the alarm device may be controlled to emit different forms of the indication dependent on the determined performance measure. For example, in the context of somatic cell count sensors it may be desirable to output an indication of the determined somatic cell count level. Multiple thresholds for somatic cell count levels may be identified and differentiated.

For example, the at least one light emitting device may be configured to emit a plurality of different coloured lights - whether multiple devices of different colour, or a single device such as a multi-colour LED. As another example, the alarm device may be configured to emit patterns (whether light or sound). For example, a slow repeating pulse may indicate a low somatic cell count, and a fast pulse may indicate a high somatic cell count.

The alarm device may be positioned in the milking facility in any manner by which an individual milking station associated with the alarm device may be determined by the operator. For example, the alarm device may be provided at the milking station in order to guide the operator to the relevant milking station.

In general the determination of whether the performance measure requires recordal against the identifier may be based on whether the performance measure is indicative of an abnormal performance requiring, or at least potentially requiring, operator attention. In an exemplary embodiment, the determination of whether the performance measure requires recordal against the identifier may be based on a comparison of the performance measure with predetermined criteria. By way of example, the processor may determine that the output of a somatic cell count sensor is above a predetermined threshold and requires attention from the operator.

In an exemplary embodiment the processor may be configured to determine whether the performance measure requires association with the identifier based on an estimated final result obtained from preliminary performance measure results. For example, an estimate of a final yield result may be obtained from yield data received through an initial portion of the milking cycle. This may allow for operators to be notified of the need to enter the animal's identity before the end of milking, potentially limiting the amount of dead time of the milking station in waiting for the operator, or risk of releasing the animal before its identity may be recorded.

It should be appreciated that determination may be influenced by a range of factors, for example: the type of performance measure, genetic factors of the herd, milk company requirements, local environmental conditions, farm feed supply, and any other requirements specific to the farm operator. For completeness, it should also be appreciated that the performance measure may be recorded without a specific animal identifier.

In an exemplary embodiment, the processor may be configured to control the alarm device to positively indicate that operator attention is not required. For example, where the alarm device includes a multi-colour light emitter, and the performance measure does not require recordal against the identifier, the alarm device may be configured to emit a particular colour (for example, green) indicating that operator attention is not required.

Similarly, in an exemplary embodiment the alarm device may include a plurality of light emitters capable of being selectively activated to differentiate between multiple predetermined thresholds of the performance measure, or another visual indicator such as a screen displaying a progress bar. It is also envisaged that the notification issued to the user device may include a virtual representation of the alert.

In an exemplary embodiment the system may record the performance measure against the identifier within an individual animal historical record. The historical record may also include, for example, one or more of: the timing of the recordal event (for example time of day and date), and one or more operator actions (for example: operator observations, designation of the animal being treated or requiring treatment).

In an exemplary embodiment, the processor may be configured to determine a malfunction event associated with one of the milking stations, and perform one or more of: activating the associated alarm device to alert the operator to the malfunction; and transmit a malfunction event notification to the user device for display in the user interface. As an example, a notification may be issued on detecting a blocked air admission hole in a teat cup cluster of a milking station.

In exemplary embodiment the malfunction event may be determined from the performance measure. However, it is also anticipated that additional sensors or outputs from components of the milking facility may be provided which are dedicated to milking facility performance as opposed to monitoring the animal or its outputs.

In an exemplary embodiment the notification transmitted to the user device of the operator may include a visual alert displayed by the user device. In exemplary embodiments the notification may cause the issuance of one or more of: an audible alert, and an alternate sensory alert such as vibration.

The user device may be any suitable device capable of displaying information and receiving user input. In an exemplary embodiment the user device may be a portable device - for example a smart phone, or tablet - and more particularly a portable device including a touch screen capable of displaying the user interface and receiving user input. In an exemplary embodiment the identifier may be input to the user device via the user interface. In an exemplary embodiment the identifier may be input via alternate means, for example one or more of: voice input, or scanning of an animal identifier tag - for example text and/or numeral and/or barcode recognition within an image captured by the user device. In exemplary embodiments in which the milking apparatus is applied to the animal from the rear, the animal identifier tag may be located towards or at the rear of the animal for ease of reading. In exemplary embodiments in which the user does not input the identifier via the user interface, the user may be required to confirm the identifier via the user interface before it is logged.

In an exemplary embodiment the user interface may be provided in the form of a website hosted by a local webserver. It is envisaged that this may assist with reducing compatibility issues with user devices of various types in comparison with a dedicated software application, with the local hosting also providing a degree of protection against internet connectivity and performance issues commonly experienced in rural areas. However, it should be appreciated that this is not intended to be limiting, and that the user interface may be provided using any suitable technology known in the art.

In an exemplary embodiment the operator may select the notification prior to entry of the identifier.

In an exemplary embodiment the user interface may enable entry of the one or more operator actions. For example, in the context of a somatic cell count sensor, the user interface may enable the operator to enter confirmation of the animal having a case of clinical mastitis. As a further example, the user interface may enable the operator to designate the animal as requiring treatment.

In an exemplary embodiment the user interface may enable entry of the one or more operator actions, without a performance measure having been obtained by the performance sensor. For example, the operator may take note of a cow suspected of having a clinical case of mastitis prior to applying teat cups of the milking station, and on investigation decide not to milk the animal. The user interface may allow a user initiated recordal of the identifier and the operator's confirmation of the animal having a case of clinical mastitis, and designation of the animal as requiring treatment.

In an exemplary embodiment, the user interface may display historical information for an animal on request from the operator. It is envisaged that this may assist the operator in decision making regarding management of the animal - for example designating the animal as requiring drafting at its next appearance at the milking facility for operator inspection and potentially treatment.

In an exemplary embodiment the user interface may display reports of performance measures recorded in the database. Such reports may include, for example, a summary of alerts issued for individual animals for a predetermined time period. The list of animals may be sorted by a range of factors, for example: the identifier, date of last alert, number of treatment instances, or number of alerts. In exemplary embodiments in which the alerts include hierarchical levels of importance, higher level alerts may be given a higher weighting. The reports may include a summary of recorded performance measures for a milking period. In exemplary embodiments the summary may identify instances of the performance measure being recorded against an identifier. In exemplary embodiments those instances may be selected to review individual animal histories. The reports may include averaged performance measures across the herd for a predetermined time period.

For a firmware and/or software (also known as a computer program) implementation, the techniques of the present disclosure may be implemented as instructions (for example, procedures, functions, and so on) that perform the functions described. It should be appreciated that the present disclosure is not described with reference to any particular programming languages, and that a variety of programming languages could be used to implement the present invention. The firmware and/or software codes may be stored in a memory, or embodied in any other processor readable medium, and executed by a processor or processors. The memory may be implemented within the processor or external to the processor.

A processor may be a microprocessor, but in the alternative, the processor may be any processor, controller, microcontroller, state machine, or cloud computing device known in the art. A processor may also be implemented as a combination of computing devices, for example, a combination of a digital signal processor (DSP) and a microprocessor, a plurality of microprocessors, one or more microprocessors in conjunction with a DSP core, or any other such configuration.

The processors may function in conjunction with servers and network connections as known in the art. By way of example, the alarm devices, performance sensors, and central processor may communicate with each other over a Controller Area Network (CAN) bus system. In an exemplary embodiment the identifier, performance measure, and any other data may be stored in a data cloud.

The steps of a method, process, or algorithm described in connection with the present disclosure may be embodied directly in hardware, in a software module executed by one or more processors, or in a combination of the two. The various steps or acts in a method or process may be performed in the order shown, or may be performed in another order. Additionally, one or more process or method steps may be omitted or one or more process or method steps may be added to the methods and processes. An additional step, block, or action may be added in the beginning, end, or intervening existing elements of the methods and processes.

### BRIEF DESCRIPTION OF DRAWINGS

Further aspects of the present invention will become apparent from the following description which is given by way of example only and with reference to the accompanying drawings in which:
- FIG. 1A: is a schematic diagram of an exemplary livestock management system;
- FIG. 1B: is a schematic diagram of an exemplary sensor and alarm device arrangement associated with a milking station of a milking facility in which the exemplary livestock management system is implemented;
- FIG. 1C: is a schematic view of an exemplary processing station of the exemplary livestock management system;
- FIG. 2: is a flow diagram of a first exemplary method of associating animal identifiers with performance measures;
- FIG. 3A: is a first view of an exemplary user interface;
- FIG. 3B: is a second view of the exemplary user interface;
- FIG. 3C: is a third view of the exemplary user interface
- FIG. 4: is a flow diagram of a second exemplary method of associating animal identifiers with performance measures.
- FIG. 5A: is a first view of another exemplary user interface;
- FIG. 5B: is a second view of the exemplary user interface;
- FIG. 6A: is a view of a first exemplary report which may be issued to an exemplary user interface;
- FIG. 6B: is a view of a second exemplary report which may be issued to the exemplary user interface, and
- FIG. 6C: is a view of a third exemplary report which may be issued to the exemplary user interface.

### DETAILED DESCRIPTION

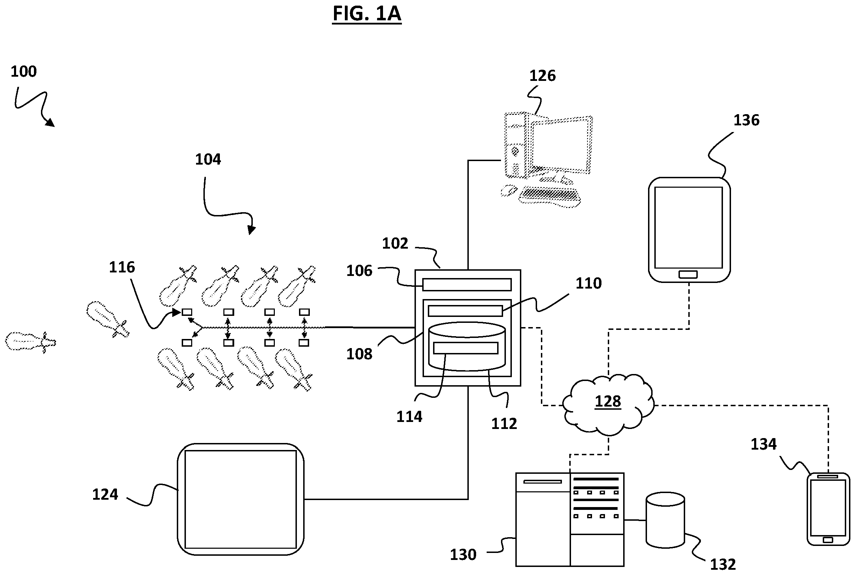

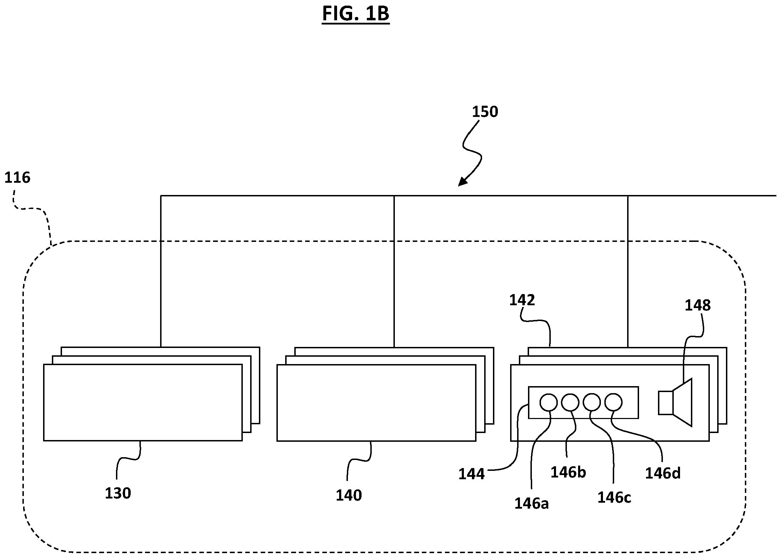

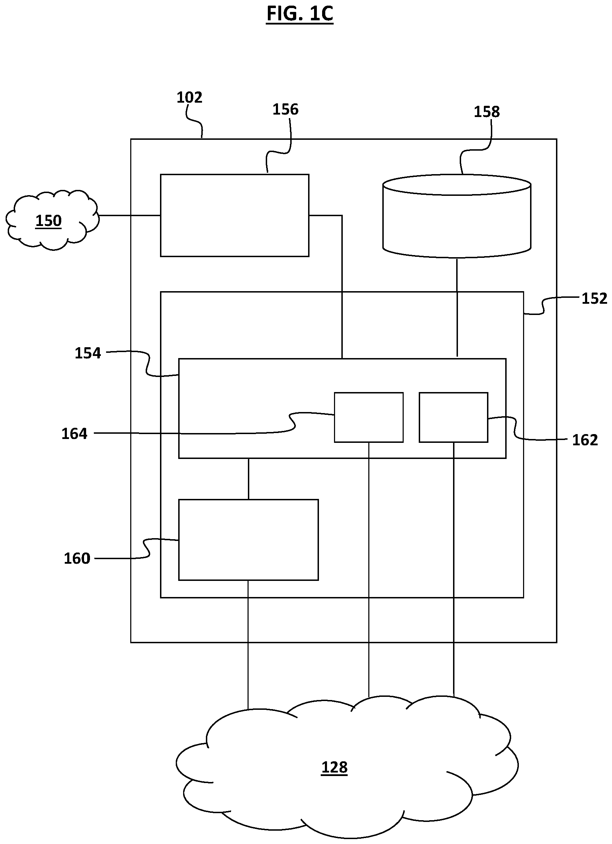

FIG. 1 illustrates a livestock management system 100, within which a local hardware platform 102 manages the collection and transmission of data relating to operation of a milking facility 104. The hardware platform 102 has a processor 106, memory 108, and other components typically present in such computing devices. In the exemplary embodiment illustrated the memory 108 stores information accessible by processor 106, the information including instructions 110 that may be executed by the processor 106 and data 112 that may be retrieved, manipulated or stored by the processor 106. The memory 108 may be of any suitable means known in the art, capable of storing information in a manner accessible by the processor 106, including a computer-readable medium, or other medium that stores data that may be read with the aid of an electronic device.

The processor 106 may be any suitable device known to a person skilled in the art. Although the processor 106 and memory 108 are illustrated as being within a single unit, it should be appreciated that this is not intended to be limiting, and that the functionality of each as herein described may be performed by multiple processors and memories, that may or may not be remote from each other.

The instructions 110 may include any set of instructions suitable for execution by the processor 106. For example, the instructions 110 may be stored as computer code on the computer-readable medium. The instructions may be stored in any suitable computer language or format.

Data 112 may be retrieved, stored or modified by processor 106 in accordance with the instructions 110. The data 112 may also be formatted in any suitable computer readable format. Again, while the data is illustrated as being contained at a single location, it should be appreciated that this is not intended to be limiting - the data may be stored in multiple memories or locations. The data 112 may also include a record 114 of control routines for aspects of the system 100.

The hardware platform 102 may communicate with various devices associated with the milking facility, for example: performance sensor arrangement 116 associated with individual milking stalls (also referred to as "bails") within the milking facility 104. It should be appreciated that while FIG. 1A is illustrated as having a performance sensor arrangement 116 associated with each individual milking stall, the present disclosure has application to other arrangements, for example where a performance sensor arrangement 116 is associated with a milking apparatus shared between multiple animals such as in a swing over herringbone configuration.

The hardware platform 102 may also communicate with user devices, such as touchscreen 124 located within the milking facility for monitoring operation of the system, and a local workstation 126.

The hardware platform 102 may also communicate over a network 128 with one or more server devices 130 having associated memory 132 for the storage and processing of data collected by the local hardware platform 102. It should be appreciated that the server 130 and memory 132 may take any suitable form known in the art - for example a "cloud based" distributed server architecture. The network 128 potentially comprises various configurations and protocols including the Internet, intranets, virtual private networks, wide area networks, local networks, private networks using communication protocols proprietary to one or more companies - whether wired or wireless, or a combination thereof.

Information regarding operation of the system 100 may be communicated to user devices such as a smart phone 134 or a tablet computer 136 over the network 128.

FIG. 1B illustrates the performance sensor assembly 116, which includes a first performance sensor - for example a Somatic Cell Count (SCC) sensor 138 such as the CellSense™ somatic cell count sensor sold by LIC Automation™. In exemplary embodiments, the performance sensor assembly 116 may include a second performance sensor 140 - for example the YieldSense™ volume, fat, and protein sensor sold by LIC Automation™. It should be appreciated that reference to these particular forms of performance sensing in the exemplary embodiment presented is not intended to be limiting to all embodiments of the present disclosure.

The performance sensor assembly 116 also includes an alarm device 142, mounted at the associated milking station. The alarm device 142 includes a visual alert device 144. In the exemplary embodiment illustrated the visual alert device 144 includes a plurality of multi-colour LEDs 146a-d capable of selectively emitting red, orange, and green light - although it should be appreciated that this is not intended to be limiting to all embodiments. In an exemplary embodiment the alarm device 142 includes a sound emitting device such as a speaker 148.

The sensors 138 and 140, and the alarm device 142, communicate with the hardware platform 102 over a Controller Area Network (CAN) bus 150.

FIG. 1C illustrates a portion of the system architecture of the hardware platform 102, including a sensor service module 152 controlling the storage and reporting of data obtained from the performance sensor assembly 116 and associated functions. The sensor service module 152 includes a result matching and recording module 154. The result matching and recording module 154 communicates with the performance sensor assembly 116 over the CAN bus 150 via a CAN bus adapter 156. The result matching and recording module 154 locally stores data being processed in local database 158.

The result matching and recording module 154 also serves a user interface to user devices (for example, smart phone 134 and tablet 136) in the form of a website via a local website module 160 - the use of which will be described further below.

The result matching and recording module 154 is also configured to record and obtain data with the cloud server memory 132 using data cloud API module 162. Reports may be issued by the result matching and recording module 154 via email module 164.

It should be appreciated that the network 128 illustrated may include distinct networks and/or connections: for example a local network over which the user interface may be accessed within the vicinity of the milking facility, and an internet connection via which the cloud server is accessed.

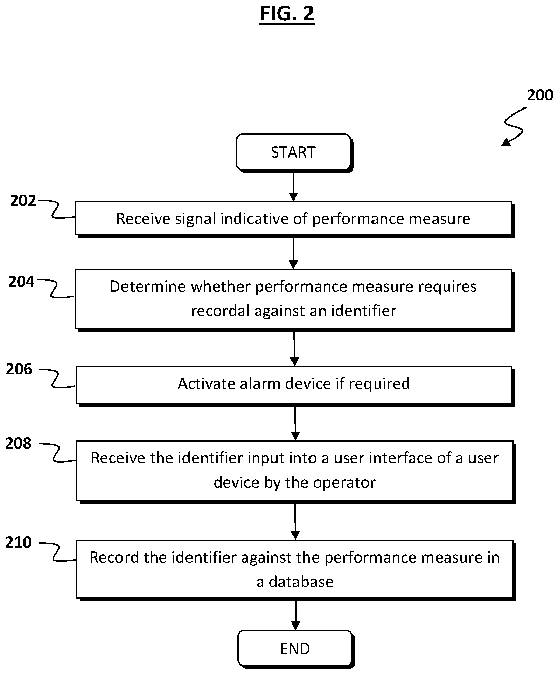

FIG. 2 illustrates an exemplary method 200 for associating an identifier of an individual animal with a performance measure provided by the performance sensor assembly 116. In step 202 the result matching and recording module 154 receives a signal from the SCC sensor 138 indicative of the current SCC level of milk extracted from the cow currently within the milking station.

In step 204 the result matching and recording module 154 compares the SCC level against predetermined thresholds previously entered into the system. If the SCC level does not exceed a threshold previously set as requiring operator attention, the SCC level is recorded in the cloud server memory 132 against the time and date of milking.

If the SCC level does exceed the predetermined threshold(s), the result matching and recording module 154 activates the alarm device 142 associated with the SCC sensor 138 in step 206 - for example, turning on the visual alert device 144.

In an exemplary embodiment, the visual alert device 144 may be controlled to display an indication of the current SCC level according to a scale having a plurality of thresholds. For example, a level below a first threshold - for example a reading of less than 400 (1000 cells per ml) - may be indicated by turning all of the LEDs 146a-d green, although for the sake of completeness it is envisaged that in exemplary embodiments this reading may not initiate activation of the visual alert device 144. A level between the first threshold and a second threshold - for example a reading of between 400 and 800 - may be indicated by turning LEDs 146a and 146b orange. A level between the second threshold and a third threshold - for example a reading of between 801 and 1000 - may be indicated by turning LEDs 146a, 146b, and 146c orange. A level above the third threshold may be indicated by turning all of the LEDs 146a-d red.

In an exemplary embodiment, the indication below the first threshold may be displayed regardless of whether operator attention is required in order to provide a positive indication that the system is functional and directing the operator to other milking stations with higher priority readings.

It should be appreciated that while the exemplary method 200 is described with regard to the SCC level results from the SCC sensor 138, this is not intended to be limiting. By way of example, other performance measures for which it may be desirable to identify an individual animal may include one or more of: electrical conductivity (used in the dairy industry as an indicator of the likelihood of mastitis), colour (as an indicator of blood in the milk), indicators of abnormal or watery milk (for example fat and/or protein content), and low yield. Numerous sensors and automated analytical techniques are known in the art for the detection of such properties.

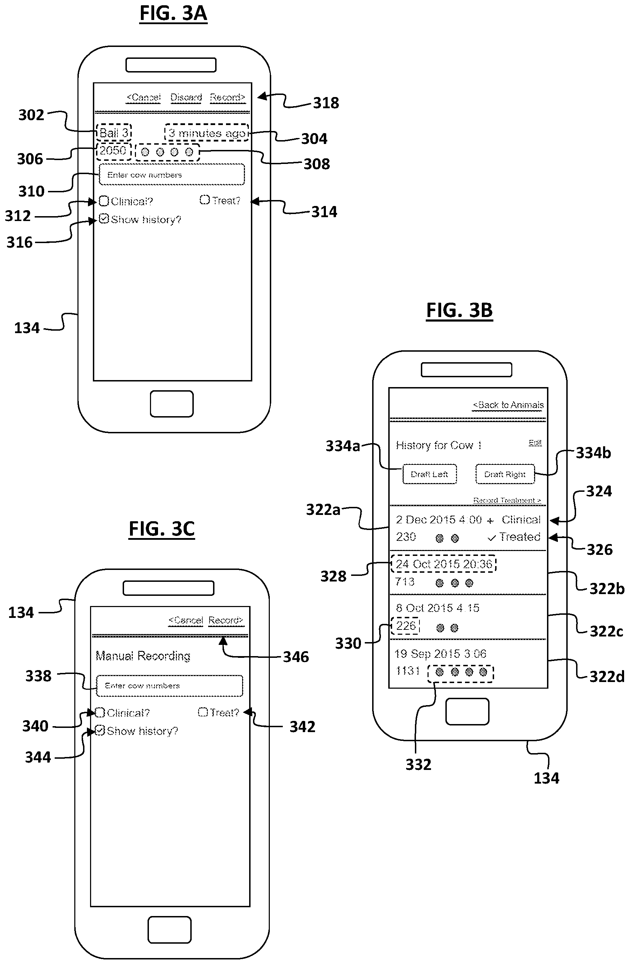

Concurrently with step 206, on determining that the SCC level exceeds the predetermined threshold(s) the result matching and recording module 154 sets a software flag for the receiving an animal indicator from the operator for association with the SCC level reading. FIG. 3A illustrates a first webpage 300 of a website providing a user interface for interaction with the sensor service module 152 via smart phone 134. The webpage 300 includes a bail identifier 302 identifying the milking station pertaining to the reading, together with a time 304 of the reading, the reading value 306, and a visual indication 308 of the reading value (for example a virtual representation of the light and colour system described above). The webpage 300 includes an animal identifier entry field 310, selection of which allows the operator to enter the identifier of the cow in the milking station (obtained, for example, by the operator reading the identifier displayed on the cow's eartag).

The webpage 300 also includes a selectable clinical control object 312, selection of which indicates that the cow is likely to have clinical mastitis according to the observations of the operator. A selectable treatment control object 314 is also provided, for indicating that the cow is to be treated for sub-clinical or clinical mastitis.

An animal history control object 316 is provided, selection of which results in the display of a history of activity for that particular animal once a record control object 318 is selected. FIG. 3B illustrates the history webpage 320 to be displayed, including a series of recorded events 322a-d for the identified animal. Each recorded event 322a-d may display a clinical indicator 324, if the clinical control object 312 was selected at the time of generating the record. Similarly, each recorded event 322a-d may display a treatment indicator 326, if the treatment control object 314 was selected at the time of generating the record.

Additionally, each recorded event 322a-d displays the date and time 328 at which the event occurred, the SCC level 330, and a visual indication 332 of the reading value.

On review of the animal's event history, the operator may determine that the animal should be drafted into a treatment or observation area on the animal's next presentation to the milking facility. First and second draft control objects 334a and 334b are provided for selection to designate the area into which the animal should be drafted.

Returning to FIG. 2 and FIG. 3A, on selection of the record control object 346, the user input is transmitted to the result matching and recording module 154 in step 208, and recorded together with the SCC level in the cloud server memory 132 in step 210.

FIG. 3C shows a webpage 336 for user initiated entry of a record independently of an animal being milked - for example where an operator takes note of a cow suspected of having a clinical case of mastitis prior to applying teat cups of the milking station, and on investigation decide not to milk the animal. The webpage 336 includes an animal identifier entry field 338, selectable clinical control object 340, selectable treatment control object 342, and animal history control object 344 - functionality of which is substantially the same as the equivalent features described in relation to FIG. 3A. On submission to the result matching and recording module 154, it is recorded in the cloud server memory 132.

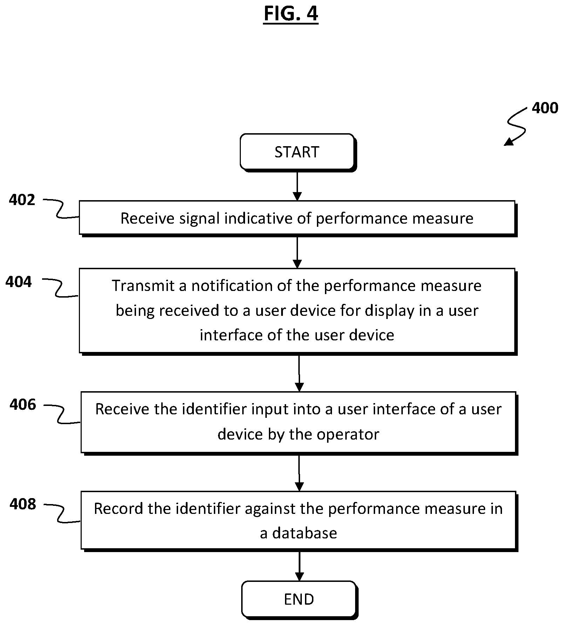

FIG. 4 illustrates another exemplary method 400 for associating an identifier of an individual animal with a performance measure provided by the performance sensor assembly 116, in which the alarm device 142 is not included, or utilised. It should be appreciated that while the exemplary method 400 is described with reference to the second performance sensor 140, this is not intended to be limiting and that the method may be implemented for performance measures from the SCC sensor 138 or other performance sensors.

In step 402 the result matching and recording module 154 receives a signal from the second performance sensor 140 indicative of one or more performance measures of milk extracted from the cow currently within the milking station - for example: conductivity, volume, fat percentage, and protein percentage.

In step 404 the result matching and recording module 154 sets a software flag for the receiving an animal indicator from the operator for association with the performance measures, and transmits a notification to a user interface of the smart phone 134. It should be appreciated that setting of the flag may be based on determination of the received performance measures of step 402 meeting a predetermined set of criteria - for example being above or below a predetermined threshold for that measure. In an exemplary embodiment this determination may be made based on preliminary data received from the second performance sensor 140 - i.e. before the end of milking. The result matching and recording module 154 may be configured to estimate a final performance measure based on this preliminary data, and perform the determination based on this estimate.

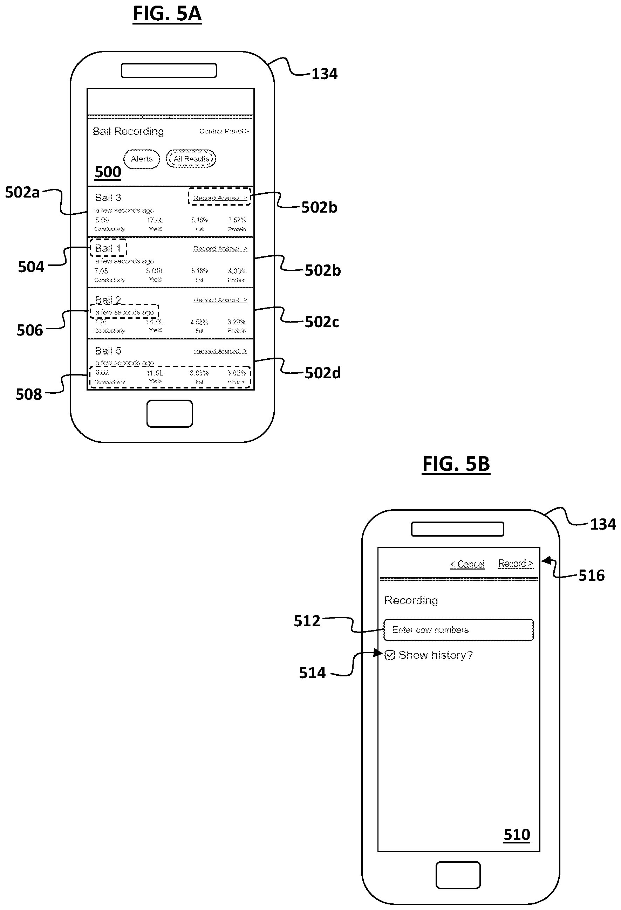

FIG. 5A illustrates a webpage 500 displaying a plurality of event notifications 502a-d. Each event notification 502a-d includes a bail identifier 504 identifying the milking station pertaining to the reading, together with a time 506 of the reading, and the reading values 508.

On selection of one of the even notifications 502a-d, a subsequent webpage 510 is displayed - as illustrated in FIG. 5B. The webpage 510 includes an animal identifier entry field 512, selection of which allows the operator to enter the identifier of the cow in the milking station. The webpage 510 also includes an animal history control object 514 is provided, selection of which results in the display of a history of activity for that particular animal once a record control object 516 is selected.

Returning to FIG. 4, on selection of the record control object 516, the user input is transmitted to the result matching and recording module 154 in step 406, and recorded together with the sensor result in the cloud server memory 132 in step 408.

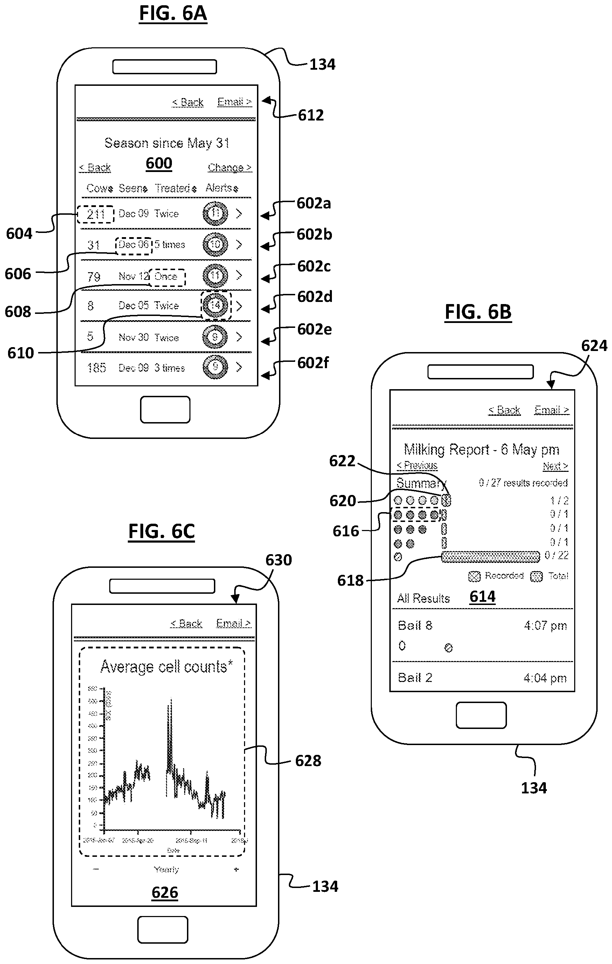

FIG. 6A illustrates a first report 600 which may be generated by the result matching and recording module 154 using historical records. The report 600 includes summaries 602a-f of alerts issued for individual animals for a predetermined time period. The list of animals may be sorted by a range of factors, for example: the identifier 604, date of last alert 606, number of treatment instances 608, or number of alerts 610. The report may be emailed to a previously designated email address on selection of an email control object 612.

FIG. 6B illustrates a second report 614 summarising recorded performance measures for a milking period. The report includes visual indicators 616 of the result values, and the number of events in each band - in this exemplary embodiment in the form of a bar 618. The bar 618 includes instances 620 of the performance measure being recorded against an identifier, in addition to unidentified instances 622. The report may be emailed to a previously designated email address on selection of an email control object 624.

FIG. 6C illustrates a third report 626 displaying a plot 628 of averaged performance measures (for example, somatic cell count) across the herd for a predetermined time period. The report may be emailed to a previously designated email address on selection of an email control object 630.

The entire disclosures of all applications, patents and publications cited above and below, if any, are herein incorporated by reference.

Reference to any prior art in this specification is not, and should not be taken as, an acknowledgement or any form of suggestion that that prior art forms part of the common general knowledge in the field of endeavour in any country in the world.

The invention may also be said broadly to consist in the parts, elements and features referred to or indicated in the specification of the application, individually or collectively, in any or all combinations of two or more of said parts, elements or features.

Where in the foregoing description reference has been made to integers or components having known equivalents thereof, those integers are herein incorporated as if individually set forth.

It should be noted that various changes and modifications to the presently preferred embodiments described herein will be apparent to those skilled in the art. Such changes and modifications may be made without departing from the spirit and scope of the invention and without diminishing its attendant advantages. It is therefore intended that such changes and modifications be included within the present invention.

Aspects of the present invention have been described by way of example only and it should be appreciated that modifications and additions may be made thereto without departing from the scope thereof as defined in the appended claims.

## Claims

1. A system (100) for use in a milking facility (104) including a plurality of individual milking stations for milking animals, the system (100) including:
at least one performance sensor (116) associated with at least one milking station, configured to output a signal indicative of a performance measure sensed by the performance sensor (116);
at least one processor (106) configured to:
receive the signal from the at least one performance sensor (116);
determine whether the performance measure is to be associated with an identifier of an individual animal being milked at the milking station;
cause a notification to be issued alerting an operator as to which milking station the performance measure was obtained from;
receive the identifier from a user device (124, 134, 136) on input by the operator; and
associate the identifier with the performance measure in a database.

2. The system (100) of claim 1, wherein the determination of whether the performance measure requires association with the identifier is based on whether the performance measure is indicative of an abnormal performance measure.

3. The system (100) of claim 1 or claim 2, wherein the determination of whether the performance measure requires association with the identifier is based on a comparison of the performance measure with predetermined criteria.

4. The system (100) of any one of claims 1 to 3, wherein the notification includes an alert condition notification transmitted to the user device (124, 134, 136), wherein preferably the operator selects the alert condition notification prior to entry of the identifier.

5. The system (100) of any one of claims 1 to 4, wherein the identifier is input by one or more of: entry via a user interface displayed by the user device (124, 134, 136), voice input, or scanning of an animal identifier tag.

6. The system (100) of any one of claims 1 to 5, wherein the at least one processor (106) is configured to receive input of one or more operator actions into the user device (124, 134, 136).

7. The system (100) of claim 6, wherein the one or more operator actions include at least one of: designation of an animal having a user determined condition, or designation of an animal requiring treatment, wherein preferably the one or more operator actions may be input without a performance measure having been obtained by the performance sensor (116).

8. The system (100) of any one of claims 1 to 7, wherein the at least one processor (106) is configured to deliver historical information for an animal for display on the user device (124, 134, 136) on request from the operator.

9. The system (100) of any one of claims 1 to 8, wherein the at least one processor (106) is configured to deliver one or more reports of performance measures recorded in the database for display on the user device (124, 134, 136), wherein preferably the reports include one or more of: a summary of notifications issued for individual animals for a predetermined time period, and a summary of performance measures associated with individual animals for a predetermined time period.

10. The system (100) of any one of claims 1 to 9, including an alarm device (142) associated with each milking station having an associated performance sensor (116), and issuing the notification includes activating the alarm device (142) to alert an operator to attend the associated milking station.

11. The system (100) of claim 10, wherein on activation the alarm device (142) is configured to emit at least one of: a visual alert, or an audible alert.

12. The system (100) of claim 10 or claim 11, wherein the alarm device (142) is configured to emit different forms of an alert depending on the determined performance measure, wherein preferably the form of the alert is dependent on a comparison of the performance measure to predetermined criteria.

13. The system (100) of any one of claims 10 to 12, wherein the processor (106) is configured to control the alarm device (142) to positively indicate that operator attention is not required.

14. The system (100) of any one of claims 1 to 13, wherein the at least one performance sensor (116) includes one or more of: a yield sensor that measures a volume of milk produced by an animal, a composition sensor that measures properties of milk, a flow rate sensor to determine the rate of delivery of milk produced by an animal, a temperature sensor, a weight sensor to determine an animal's weight, a sensor configured to measure the feed efficiency of an animal, a sensor configured to measure the environmental impact of an animal, a sensor configured to measure the reproductive status of an animal, a sensor configured to measure properties of milk relevant to milk processing, a sensor detecting movement activity of an animal, or a health sensor configured to measure indicators of one or more of: mastitis, body condition score, metabolic disorders, lameness, fertility disorders, BVD, or Johne's disease.

15. A method for associating an identifier of an individual animal with a performance measure provided by at least one performance sensor (116) associated with a milking station in a milking facility (104) including a plurality of individual milking stations for milking animals, wherein the method includes:
receiving, by at least one processor (106), a signal indicative of the performance measure sensed by the at least one performance sensor (116);
determining, with the at least one processor (106), whether the performance measure is to be associated with an identifier associated of the individual animal being milked at the associated milking station;
causing a notification to be issued alerting an operator as to which milking station the performance measure was obtained from;
receiving, by at least one processor (106), the identifier input into a user device (124, 134, 136) by the operator; and
associating the identifier with the performance measure in a database.

## Patentansprüche

1. System (100) zur Verwendung in einer Melkanlage (104), die eine Vielzahl individueller Melkstationen zum Melken von Tieren beinhaltet, wobei das System (100) Folgendes beinhaltet:
mindestens einen Leistungssensor (116), der mindestens einer Melkstation zugeordnet ist und dazu konfiguriert ist, ein Signal auszugeben, das einen durch den Leistungssensor (116) erfassten Leistungsmesswert angibt;
mindestens einen Prozessor (106), der für Folgendes konfiguriert ist:
Empfangen des Signals von dem mindestens einen Leistungssensor (116) ;
Bestimmen, ob der Leistungsmesswert einer Kennung eines individuellen Tiers zugeordnet werden soll, das an der Melkstation gemelkt wird;
Veranlassen, dass eine Benachrichtigung ausgegeben wird, die einen Bediener darauf hinweist, von welcher Melkstation der Leistungsmesswert erhalten wurde;
Empfangen der Kennung von einer Benutzervorrichtung (124, 134, 136) nach Eingabe durch den Bediener; und
Zuordnen der Kennung zu dem Leistungsmesswert in einer Datenbank.

2. System (100) nach Anspruch 1, wobei die Bestimmung darüber, ob der Leistungsmesswert der Kennung zugeordnet werden muss, darauf beruht, ob der Leistungsmesswert einen abnormalen Leistungsmesswert angibt.

3. System (100) nach Anspruch 1 oder Anspruch 2, wobei die Bestimmung darüber, ob der Leistungsmesswert der Kennung zugeordnet werden muss, auf einem Vergleich des Leistungsmesswerts mit vorher festgelegten Kriterien beruht.

4. System (100) nach einem der Ansprüche 1 bis 3, wobei die Benachrichtigung eine an die Benutzervorrichtung (124, 134, 136) übertragene Warnzustand-Benachrichtigung beinhaltet, wobei vorzugsweise der Bediener die Warnzustand-Benachrichtigung auswählt, bevor er die Kennung eingibt.

5. System (100) nach einem der Ansprüche 1 bis 4, wobei die Kennung durch einen oder mehrere des Folgenden eingegeben wird: Eingabe über eine durch die Benutzervorrichtung (124, 134, 136) angezeigte Benutzerschnittstelle, Spracheingabe oder Scannen einer Tierkennungsmarke.

6. System (100) nach einem der Ansprüche 1 bis 5, wobei der mindestens eine Prozessor (106) dazu konfiguriert ist, Eingaben einer oder mehrerer Bedieneraktionen an der Benutzervorrichtung (124, 134, 136) zu empfangen.

7. System (100) nach Anspruch 6, wobei die eine oder die mehreren Bedieneraktionen mindestens eines des Folgenden beinhalten: Kennzeichnung, dass ein Tier eine benutzerbestimmte Krankheit aufweist, oder Kennzeichnung eines Tiers, das behandelt werden muss, wobei vorzugsweise die eine oder die mehrere Bedieneraktionen eingeben werden können, ohne dass über den Leistungssensor (116) ein Leistungsmesswert erhalten wurde.

8. System (100) nach einem der Ansprüche 1 bis 7, wobei der mindestens eine Prozessor (106) dazu konfiguriert ist, Verlaufsdaten für ein Tier zur Anzeige auf der Benutzervorrichtung (124, 134, 136) auf Anfrage des Bedieners bereitzustellen.

9. System (100) nach einem der Ansprüche 1 bis 8, wobei der mindestens eine Prozessor (106) dazu konfiguriert ist, einen oder mehrere Berichte mit in der Datenbank aufgezeichneten Leistungsmesswerten zur Anzeige auf der Benutzervorrichtung (124, 134, 136) bereitzustellen, wobei vorzugsweise die Berichte eines oder mehrere des Folgendes beinhalten: eine Zusammenfassung ausgegebener Benachrichtigungen für individuelle Tiere für einen vorher festgelegten Zeitraum und eine Zusammenfassung individuellen Tieren zugeordneter Leistungsmesswerte für einen vorher festgelegten Zeitraum.

10. System (100) nach einem der Ansprüche 1 bis 9, das eine Warnvorrichtung (142) beinhaltet, die jeweils einer Melkstation zugeordnet ist, die einen zugehörigen Leistungssensor (116) aufweist, und wobei das Ausgeben der Benachrichtigung ein Aktivieren der Warnvorrichtung (142) beinhaltet, damit diese einen Bediener darauf hinweist, sich um die zugehörige Melkstation zu kümmern.

11. System (100) nach Anspruch 10, wobei die Warnvorrichtung (142) bei Aktivierung dazu konfiguriert ist, mindestens eines des Folgenden zu emittieren: eine visuelle Warnmeldung oder eine akustische Warnmeldung.

12. System (100) nach Anspruch 10 oder Anspruch 11, wobei die Warnvorrichtung (142) dazu konfiguriert ist, je nach dem bestimmten Leistungsmesswert unterschiedliche Arten einer Warnmeldung zu emittieren, wobei vorzugsweise die Art der Warnmeldung von einem Vergleich des Leistungsmesswerts mit vorher festgelegten Kriterien abhängt.

13. System (100) nach einem der Ansprüche 10 bis 12, wobei der Prozessor (106), dazu konfiguriert ist, die Warnvorrichtung (142) so zu steuern, dass sie eindeutig angibt, dass kein Eingreifen des Bedieners erforderlich ist.

14. System (100) nach einem der Ansprüche 1 bis 13, wobei der mindestens eine Leistungssensor (116) einen oder mehrere der folgenden beinhaltet: einen Ertragssensor, der ein Volumen der von einem Tier erzeugten Milch misst, einen Zusammensetzungssensor, der Eigenschaften der Milch misst, einen Durchflussratensensor zum Bestimmen der Abgaberate der von einem Tier erzeugten Milch, einen Temperatursensor, einen Gewichtssensor zum Bestimmen des Gewichts eines Tiers, einen Sensor, der dazu konfiguriert ist, die Futterverwertung eines Tiers zu messen, einen Sensor, der dazu konfiguriert ist, die Auswirkungen eines Tiers auf die Umwelt zu messen, einen Sensor, der dazu konfiguriert ist, den Fortpflanzungsstatus eines Tiers zu messen, einen Sensor, der dazu konfiguriert ist, für die Milchverarbeitung relevante Eigenschaften der Milch zu messen, einen Sensor, der die Bewegungsaktivität eines Tiers detektiert, oder einen Gesundheitssensor, der dazu konfiguriert ist, Indikatoren für eines oder mehrere des Folgenden zu messen: Euterentzündung, Körperkonditionswert, Stoffwechselstörungen, Lahmheit, Fertilitätsstörungen, BVD oder Johnesche Krankheit.

15. Verfahren zum Zuordnen einer Kennung eines individuellen Tiers zu einem Leistungsmesswert, der von mindestens einem Leistungssensor (116) bereitgestellt wird, der einer Melkstation in einer Melkanlage (104) zugeordnet ist, die eine Vielzahl individueller Melkstationen zum Melken von Tieren beinhaltet, wobei das Verfahren Folgendes beinhaltet:
Empfangen eines Signals durch den mindestens einen Prozessor (106), das den durch den mindestens einen Leistungssensor (116) erfassten Leistungsmesswert angibt;
Bestimmen mithilfe des mindestens einen Prozessors (106), ob der Leistungsmesswert einer Kennung zugeordnet werden soll, die dem individuellen Tier zugeordnet ist, das an der zugehörigen Melkstation gemelkt wird;
Veranlassen, dass eine Benachrichtigung ausgegeben wird, die einen Bediener darauf hinweist, von welcher Melkstation der Leistungsmesswert erhalten wurde;
Empfangen der Kennung, die durch den Bediener in eine Benutzervorrichtung (124, 134, 136) eingegeben wurde, durch den mindestens einen Prozessor (106); und
Zuordnen der Kennung zu dem Leistungsmesswert in einer Datenbank.

## Revendications

1. Système (100) destiné à être utilisé dans une installation de traite (104) comprenant une pluralité de postes de traite individuels pour la traite d'animaux, le système (100) comprenant :
au moins un capteur de performance (116) associé à au moins un poste de traite, conçu pour émettre un signal indiquant une mesure de performance détectée par le capteur de performance (116) ;
au moins un processeur (106) conçu pour :
recevoir le signal provenant de l'au moins un capteur de performance (116) ;
déterminer si la mesure de performance doit être associée ou non à un identifiant d'un animal individuel en cours de traite au niveau du poste de traite ;
émettre une notification indiquant à un opérateur le poste de traite à partir duquel la mesure de performance a été obtenue ;
recevoir l'identifiant à partir d'un dispositif utilisateur (124, 134, 136) lors de l'entrée par l'opérateur ; et
associer l'identifiant à la mesure de performance dans une base de données.

2. Système (100) selon la revendication 1, dans lequel la détermination selon laquelle la mesure de performance nécessite ou non une association avec l'identifiant est basée sur le fait que la mesure de performance indique ou non une mesure de performance anormale.

3. Système (100) selon la revendication 1 ou la revendication 2, dans lequel la détermination selon laquelle la mesure de performance nécessite ou non une association avec l'identifiant est basée sur une comparaison de la mesure de performance avec des critères prédéterminés.

4. Système (100) selon l'une quelconque des revendications 1 à 3, dans lequel la notification comprend une notification de condition d'alerte transmise au dispositif utilisateur (124, 134, 136), dans lequel l'opérateur sélectionne de préférence la notification de condition d'alerte avant l'entrée de l'identifiant.

5. Système (100) selon l'une quelconque des revendications 1 à 4, dans lequel l'identifiant est entré par un ou plusieurs des moyens suivants : une entrée par l'intermédiaire d'une interface utilisateur affichée par le dispositif utilisateur (124, 134, 136), une entrée vocale ou un balayage d'une étiquette d'identification d'animal.

6. Système (100) selon l'une quelconque des revendications 1 à 5, dans lequel l'au moins un processeur (106) est conçu pour recevoir l'entrée d'une ou de plusieurs actions de l'opérateur dans le dispositif utilisateur (124, 134, 136).

7. Système (100) selon la revendication 6, dans lequel les une ou plusieurs actions de l'opérateur comprennent au moins l'une parmi :
une désignation d'un animal ayant une condition déterminée par l'utilisateur, ou une désignation d'un animal nécessitant un traitement, dans lequel, de préférence, les une ou plusieurs actions de l'opérateur peuvent être entrées sans qu'une mesure de performance n'ait été obtenue par le capteur de performance (116) .

8. Système (100) selon l'une quelconque des revendications 1 à 7, dans lequel l'au moins un processeur (106) est conçu pour fournir des données historiques pour un animal à afficher sur le dispositif utilisateur (124, 134, 136) à la demande de l'opérateur.

9. Système (100) selon l'une quelconque des revendications 1 à 8, dans lequel l'au moins un processeur (106) est conçu pour fournir un ou plusieurs rapports des mesures de performance enregistrées dans la base de données à afficher sur le dispositif utilisateur (124, 134, 136), dans lequel les rapports comprennent de préférence un ou plusieurs des éléments suivants : un résumé des notifications émises pour des animaux individuels pendant une période prédéterminée et un résumé des mesures de performance associées à des animaux individuels pendant une période prédéterminée.

10. Système (100) selon l'une quelconque des revendications 1 à 9, comprenant un dispositif d'alarme (142) associé à chaque poste de traite ayant un capteur de performance associé (116), et l'émission de la notification comprend l'activation du dispositif d'alarme (142) pour indiquer à un opérateur qu'il doit se rendre au poste de traite associé.

11. Système (100) selon la revendication 10, dans lequel, lors de l'activation, le dispositif d'alarme (142) est conçu pour émettre au moins l'une parmi : une alerte visuelle ou une alerte sonore.

12. Système (100) selon la revendication 10 ou la revendication 11, dans lequel le dispositif d'alarme (142) est conçu pour émettre différentes formes d'alerte en fonction de la mesure de performance déterminée, dans lequel la forme de l'alerte dépend de préférence d'une comparaison de la mesure de performance avec des critères prédéterminés.

13. Système (100) selon l'une quelconque des revendications 10 à 12, dans lequel le processeur (106) est conçu pour commander le dispositif d'alarme (142) pour indiquer positivement que l'attention de l'opérateur n'est pas requise.

14. Système (100) selon l'une quelconque des revendications 1 à 13, dans lequel l'au moins un capteur de performance (116) comprend un ou plusieurs éléments parmi : un capteur de rendement qui mesure un volume de lait produit par un animal, un capteur de composition qui mesure les propriétés du lait, un capteur de débit pour déterminer le débit de lait produit par un animal, un capteur de température, un capteur de poids pour déterminer le poids d'un animal, un capteur conçu pour mesurer l'efficacité alimentaire d'un animal, un capteur conçu pour mesurer l'impact environnemental d'un animal, un capteur conçu pour mesurer l'état reproducteur d'un animal, un capteur conçu pour mesurer les propriétés du lait pertinentes pour la transformation du lait, un capteur détectant l'activité de mouvement d'un animal ou un capteur de santé conçu pour mesurer des indicateurs d'un ou plusieurs éléments parmi : une mammite, une note d'état corporel, des troubles métaboliques, une boiterie, des troubles de la fertilité, une BVD ou une maladie de Johne.

15. Procédé d'association d'un identifiant d'un animal individuel avec une mesure de performance fournie par au moins un capteur de performance (116) associé à un poste de traite dans une installation de traite (104) comprenant une pluralité de postes de traite individuels pour la traite d'animaux, le procédé comprenant :
la réception, par au moins un processeur (106), d'un signal indiquant la mesure de performance détectée par l'au moins un capteur de performance (116) ;
la détermination, avec l'au moins un processeur (106), selon laquelle la mesure de performance doit être associée ou non à un identifiant associé à l'animal individuel en cours de traite au niveau du poste de traite associé ;
l'émission d'une notification indiquant à un opérateur le poste de traite à partir duquel la mesure de performance a été obtenue ;
la réception, par au moins un processeur (106), de l'identifiant entré dans un dispositif utilisateur (124, 134, 136) par l'opérateur ; et
l'association de l'identifiant avec la mesure de performance dans une base de données.
